# EUROPEAN PATENT APPLICATION

(11) **EP 2 368 784 A1**
(43) Date of publication of application: **28.09.2011**
(21) Application number: 11157355.6
(22) Date of filing: 08.03.2011
(51) Int. Cl.: B62B 7/08

(54) **Foldable stroller**

(30) Priority: 09.03.2010 NL 2004371
(71) Applicant: Maxi Miliaan B.V., 5704 RD Helmond (NL)
(72) Inventor: Karremans, Taco, B-3900, Overpelt (BE); Schrooten, Mark, B-2020, Antwerpen (BE); Mintiens, Benoît, B-2547, Lint (BE)
(74) Representative: Veldman-Dijkers, Cornelia G. C.

(57) **Abstract**

A stroller comprises at least a foldable frame being provided with at least a first and a second assembly of at least a first leg, a second leg and an arm provided with a handle part. In each assembly, the arm is provided with a first gear part being pivotable about a first pivot axis of the first leg, the second leg is provided with a second gear part being pivotable about a second pivot axis of the first leg, wherein the gear parts of the arm and the second leg are in mesh with each other.

## Description

### FIELD OF THE INVENTION

The invention relates to a stroller comprising at least a foldable frame being provided with at least a first and a second assembly of at least a first leg, a second leg and an arm provided with a handle part, wherein in each assembly, the arm is provided with a first gear part being pivotable about a first pivot axis of the first leg, the second leg is provided with a second gear part being pivotable about a second pivot axis of the first leg, wherein the gear parts of the arm and the second leg are in mesh with each other.

### BACKGROUND OF THE INVENTION

Such a stroller is known from EP1647463. By the stroller as disclosed in EP1647463 the two assemblies are rigidly interconnected. The arms and the handle parts form a rigid U-shaped handle. The first legs are each provided with a rear wheel. The second legs belong to a U-shaped front fork being provided with one single central front wheel. When folding the stroller, the second legs are being pivoted in a first direction with respect to the first legs and the central front wheel is being moved towards the rear wheels. Due to the meshing gear parts, the arms are being pivoted in a second direction being opposite to the first direction, wherein the U-shaped handle is moved towards the rear wheels at a side avert of the front wheel. The gear parts provide for a relatively simple construction for folding the stroller. By this known stroller, the rear wheels are being moved towards each other whilst folding the frame to reduce the width of the folded stroller to the width of the U-shaped handle and the U-shaped front fork. However, the width of the folded frame still remains relatively large, which makes the storage of the stroller relatively cumbersome.

### SUMMARY OF THE INVENTION

It is an object of the invention to provide a stroller wherein the width of the stroller in its folded position is substantially reduced with respect to the stroller in its unfolded position.

This object is achieved by the stroller according to the invention in that at least a pair of legs or a pair of arms of the assemblies are connected to each other near ends avert of the pivot axes by means of at least two interconnected parts being pivotable about at least one pivot axis, each part being swivelable about a swivel axis near the end avert of the pivot axes, wherein at least one part of a leg is connected to the other leg or arm of the same assembly, whilst at least one part of an arm is connected to one of the legs of the same assembly by means of at least one operating element for swivelling at least one part with respect to the corresponding leg or arm, wherein by pivoting the arm and second leg with respect to the first leg from an unfolded position to a folded position, the at least one operating element is being moved, whereby the parts are being swivelled from a first position in which the assemblies are spaced apart to a second position in which the assemblies are located closer to each other, and vice versa.

Due to the pivotably interconnected parts, the two assemblies can be moved towards each other when folding the frame to the folded position. By moving the assemblies towards each other the width of the folded stroller is substantially reduced. Since the operating element is connected to the swivelable part of one leg as well as to the arm or the other leg of the same assembly or is connected to the swivelable part of the arm as well as to one of the legs of the same assembly, the operating element will force the swivelable part to swivel automatically when the assembly is being folded. A user simply has to pivot the arms with respect to the first legs, wherein automatically the second legs are also moved towards the first legs and the assemblies are being moved towards each other. The first legs will be located between the second legs and the arms, the wheels connected to the four legs will be located close to each other and also the handle parts will be located close to each other. So a very compact folded stroller is obtained.

An embodiment of the stroller according to the invention is characterized in that the parts are swivelable about swivel axes of the second legs, wherein the operating element is connected with its second end to the first leg.

By locating the swivelable parts between swivel axis located near ends of the second legs, which ends are located avert of the pivot axes, the swivelable parts will cause the seconds legs to move towards each other when folding the frame. The other legs and arms will follow this movement.

Another embodiment of the stroller according to the invention is characterized in that the parts are swivelable about swivel axes of the first legs, wherein the operating element is connected with its second end to the second leg.

By locating the swivelable parts between swivel axis located near ends of the first legs, which ends are located avert of the pivot axes, the swivelable parts will cause the first legs to move towards each other when folding the frame. The other legs and arms will follow this movement.

When swivelable parts are located between the first legs as well as between the second legs, the assemblies can easily be moved towards and away from each other.

In case that the operating element comprises only rigid elements, the operating element is suitable for exerting a pulling force and a pushing force on the swivelable part and will cause the swivelable part to swivel both during folding and unfolding of the frame. In case that the operating element comprises a flexible bendable element, the operating element is more suitable for only exerting a pulling force on the part to cause the swivelable part to swivel during folding or unfolding of the frame.

A further embodiment of the stroller according to the invention is characterized in that the handle parts of the arms are swivelable about the swivel axes of the arm, wherein the operating element is connected with its second end to the first leg.

By using the pivotably connected handle parts as the two pivotably interconnected parts, the swivelling of the handle parts will cause the arms to move towards each other when folding the frame. The other legs will follow this movement, especially when also the first legs and/or second legs are also connected to each other near ends avert of the pivot axes by means of at least two pivotably interconnected parts.

A further embodiment of the stroller according to the invention is characterized in that the assemblies are connected to each other near ends avert of the pivot axes of the pair of arms, near ends avert of the pivot axes of the pair of first legs and near ends avert of the pivot axes of the pair of second legs, by means of at least two pivotably interconnected parts extending between the first ends of the arms, the first legs and the second legs respectively.

In this manner the movement of the assemblies towards each other is very well controlled. The unfolded stroller will be very stable due to the interconnected parts located near the ends of the first legs, the ends of the second legs and the ends of the arms. Furthermore, the whole space between the assemblies is available for mounting a seat, a basket or other elements.

A further embodiment of the stroller according to the invention is characterized in that the pivotably interconnected parts are connected to each other by means of at least a intermediate part.

Due to the intermediate part which is preferably pivotably connected to the parts, any desired movement of the assemblies towards each other can be obtained.

A further embodiment of the stroller according to the invention is characterized in that the operating element comprises at least a rod being pivotably connected to the leg or the arm and pivotably connected to an extension member located between the rod and the swivelable part.

Due to the rod, which might be curved to easily fit in the legs and arms, it is possible to connect the operating element to any desired location in or on the legs or arms.

A further embodiment of the stroller according to the invention is characterized in that the operating member or the swivelable part comprises a pin being slidable in a slot of the swivelable part or operating member respectively for swivelling the part about the swivel axis.

Such a pin-slot construction renders it relatively easily to convert a linear movement into a rotational movement.

A further embodiment of the stroller according to the invention is characterized in that the frame comprises locking means for locking the gear parts against rotation.

Such locking means will easily prevents the frame against being folded unintentionally.

### BRIEF DESCRIPTION OF THE DRAWINGS

The invention will be explained in more detail with reference to the drawings, in which
figure 1 is a perspective view of a stroller according to the invention, with the stroller in the unfolded position,
figure 2 is a perspective view of a stroller as shown in figure 1 according to the invention, with the stroller in the partly folded position,
figure 3 is a perspective view of a stroller as shown in figure 1 according to the invention, with the stroller in the folded position,
figure 4 is a cross section showing the function of a central part of an assembly of the stroller as shown in figure 1,
figure ₅A-₅C are cross sections of a central part of an assembly of the stroller as shown in figure 1, in an unfolded position, a partly folded position and a folded position of the stroller, respectively,
figure 6A and 6B are perspective views of a first embodiment of pivotably interconnected parts in an unfolded position and a folded position of the stroller, respectively,
figure ₇A and ₇B are schematic front views of the first embodiment as shown in figures 6A and 6B respectively,
figure 8A and 8B are schematic front views of a second embodiment of two pivotably interconnected parts in an unfolded position and a folded position of the stroller, respectively,
figure 9 us a schematic view of a third embodiment of pivotably interconnected parts in an unfolded position.
Like parts are indicated by the same reference numbers in the figures.

### DETAILED DESCRIPTION OF EMBODIMENTS

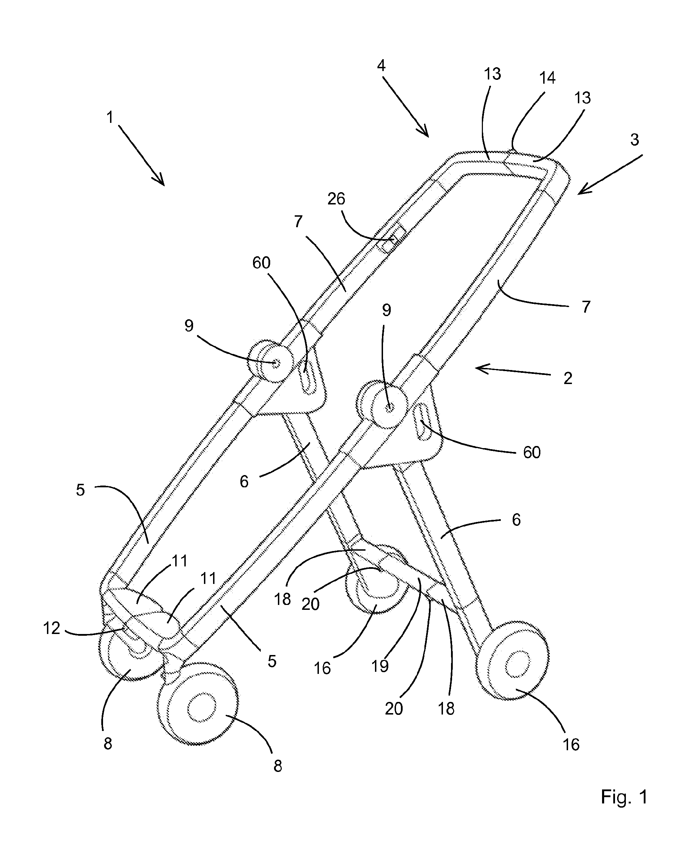

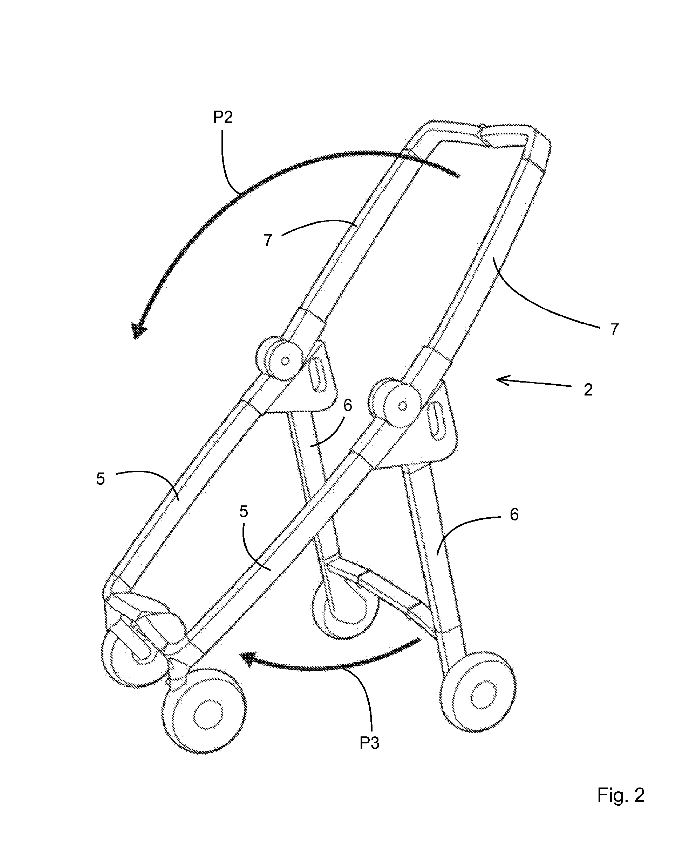

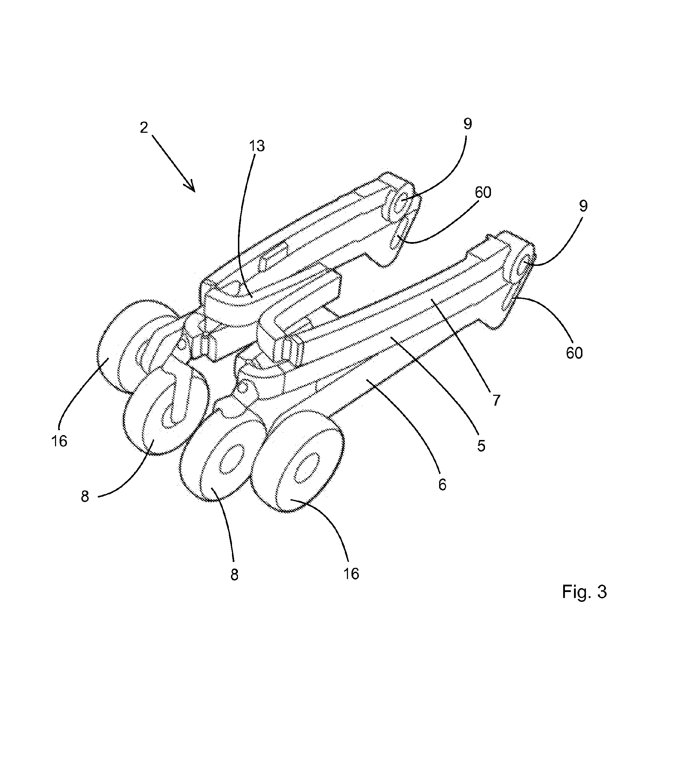

Figure 1, 2 and 3 show perspective views of a stroller I according to the invention in an unfolded position, a partly folded position and a folded position, respectively. The stroller I is provided with a foldable frame 2 and a seat detachably connected to the frame 2. For the sake of clarity, the seat for a child is not shown in the drawings but such a seat is commonly known. The frame 2 is provided with a first assembly 3 and a second assembly 4. Each assembly 3, 4 is provided with a first leg 5, a second leg 6 and an arm 7. The legs 5, 6 and the arms ₇ are preferably made of hollow tubes of metal or plastic.

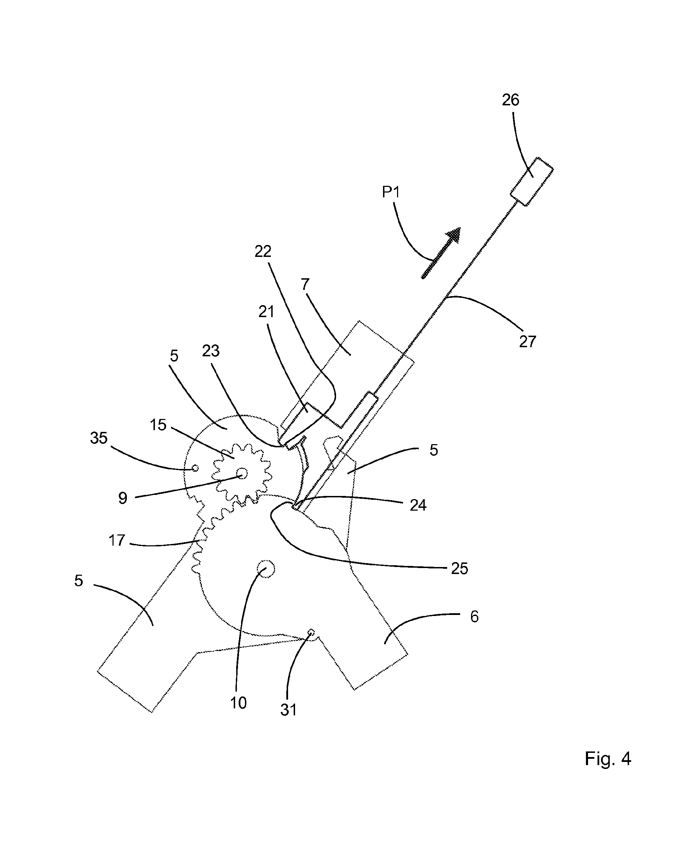

Each first leg 5 is provided near a first end with a front wheel 8 and near a second end with two pivot axes 9, 10 (see figure 4-5C). Near the first ends the first legs 5 are connected to each other by means of two parts II. The parts II are pivotably connected to each other about a pivot axis 12. Each part II is swivelably connected to its corresponding first leg 5.

Each arm 7 is provided near a first end with a handle part 13 being pivotably connected to each other about a pivot axis 14. Each handle part 13 is swivelably connected to its corresponding arm 7. Each arm is provided near a second end with a first gear part 15 being pivotable about the first pivot axis 9 of the first leg 5. The first gear part 15 comprises teeth around its whole circumference.

Each second leg 6 is provided near a first end with a rear wheel 16 and near a second end with a second gear part 17 being pivotable about the second pivot axis 10 of the first leg 5. The second gear part 17 comprises teeth around a limited section of its circumference. Near the first ends the second legs 6 are connected to each other by means of three parts 18, 19, wherein the part 19 is located between two parts 18. The parts 18 are pivotably connected to the part 19 about a pivot axis 20. Each part 18 is swivelably connected to its corresponding second leg 6.

The gear parts 15, 17 of the arm and the second leg 6 are in mesh with each other.

Each assembly 3, 4 is further provided with a lock 21 being slidably located in the arm 7. The lock 21 comprises a first protrusion 22 being located in an opening 23 in the first leg 5 to prevent the pivoting of the arm with respect to the first leg 5.The lock 21 comprises a second protrusion 24 being in abutment with a part 25 of the second leg 6 to prevent the pivoting of the arm with respect to the second leg 6.

The lock 21 is movable against spring force in a direction as indicated by arrow P1 by means of a knob 26. The knob 26 is connected to the lock 21 by a cable 27. The lock 21 and cable 27 are preferably located inside the hollow arm 7 so that they are hidden from view, whilst the knob 26 extends partly outside the arm 7 so that a user can operate the knob 26.

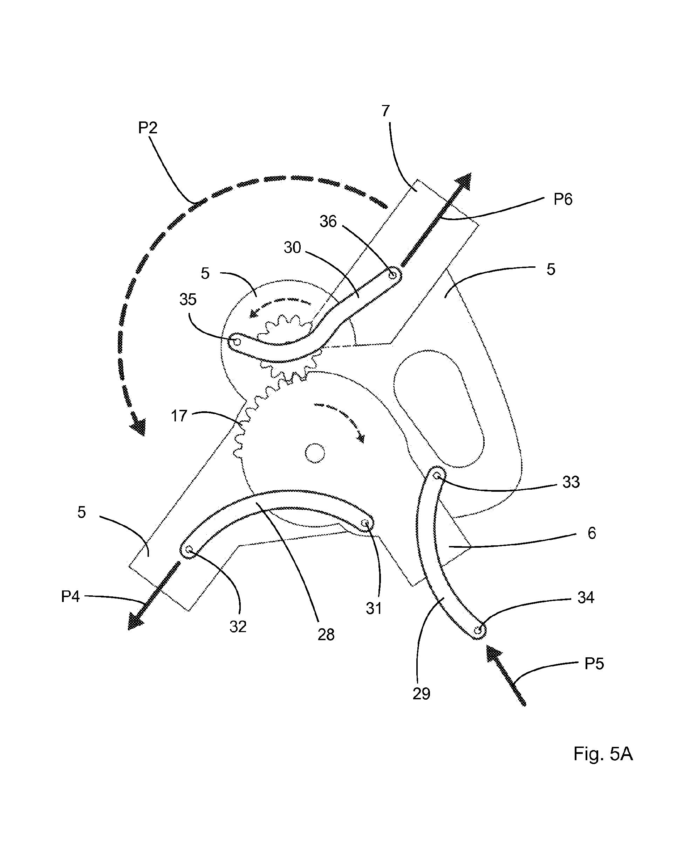

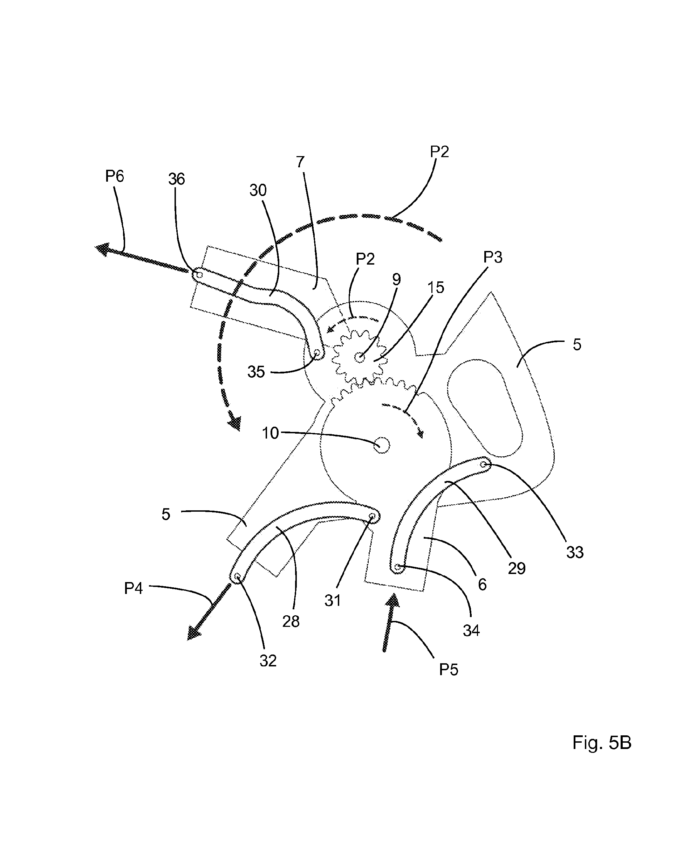

Figures 5A-5C, show curved rods 28, 29, 30 of three operating elements for swivelling the swivelable parts II, 18, 13 of the first leg 5, the second leg 6 and the arm respectively.

A first end of the rod 28 is pivotably connected about a pivot axis 31 to the second leg 6. A second end 32 of the rod 28 is connected to a first end of a first extension element of the operating element which is connected with its other second end to the part II of the first leg 5 at a distance of the swivel axis thereof. The first extension element is located inside the hollow first leg 5.

A first end of the rod 29 is pivotably connected about a pivot axis 33 to the first leg 5. A second end 34 of the rod 29 is connected to a first end of a second extension element which is connected with its other second end to the part 18 of the second leg 6 at a distance of the swivel axis thereof. The second extension element is located inside the hollow second leg 6.

A first end of the rod 30 is pivotably connected about a pivot axis 35 to the first leg 5. A second end 36 of the rod 30 is connected to a first end of a third extension element which is connected with its other second end to the handle part 13 of the arm 7 at a distance of the swivel axis thereof. The third extension element is located inside the hollow arm 7.

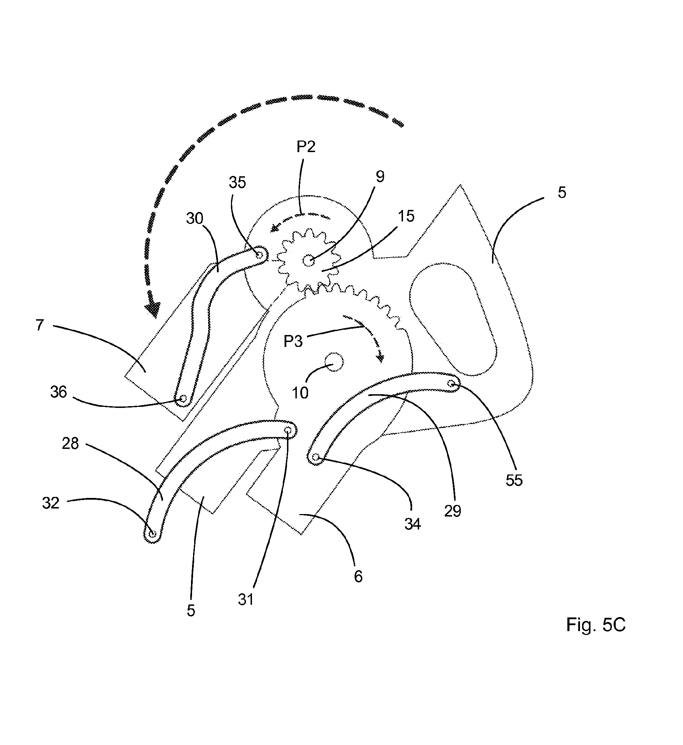

The folding of the frame 2 of the stroller I works as follows. A user unlocks the locks 21 and pivots the arms 7 about the pivot axes 9 in the direction as indicated by arrow P2. By doing so, the first gear part 15 will force the second gear part 17 to rotate in opposite direction indicated by arrow P3 until the arms 7 and the second legs 6 are located against different sides of the first legs 5 (see figure 5C). While pivoting the arms and second legs 6, the rods 28, 29, 30 will be moved as well, wherein the second end 32 of the rod 28 will be moved towards the part II in the direction as indicated by arrow P₄, the second end 34 of the rod 29 will be moved away from the part 18 in the direction as indicated by arrow P5 and the second end 36 of the rod 30 will be moved towards the handle part 13 in the direction as indicated by arrow P6. These movements will cause the extension elements connected to the rods 28, 29, 30 to be moved accordingly and will cause the parts II, 18, 13 to swivel as will be explained here below.

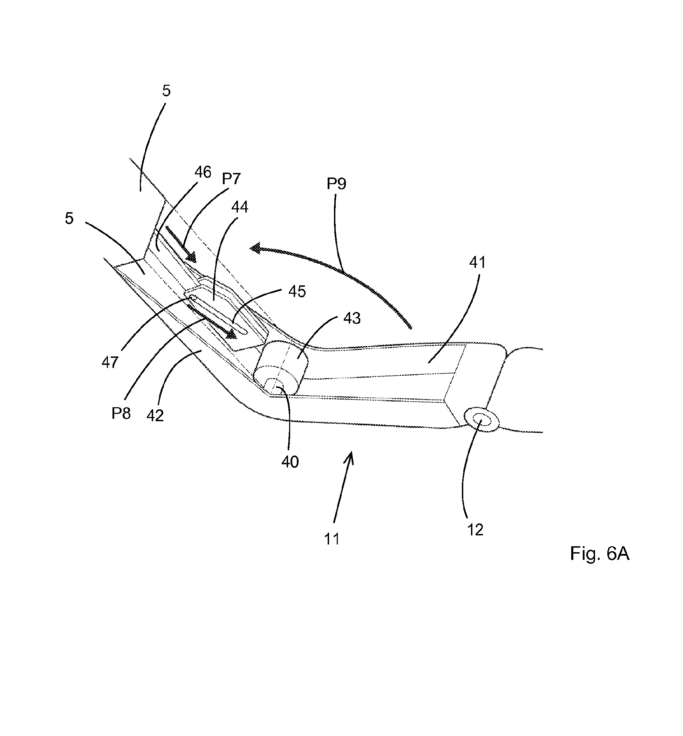

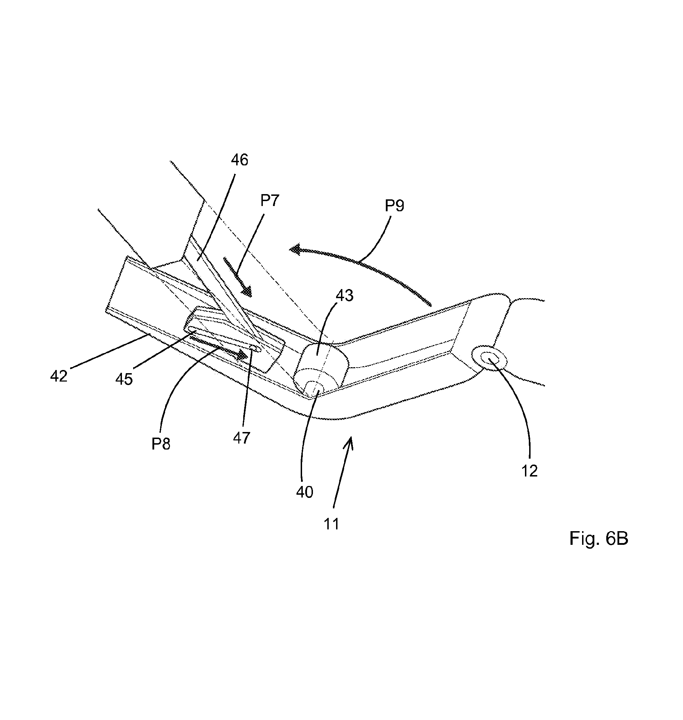

The connection between the rods 28, 29, 30 and the swivelable parts II, 18, 13 respectively and the swivelling of the parts II, 18, 13 can be realised in several different manners. Fig. 6A-8B show two different possibilities which can each be used for swivelling part II, part 18 and/or handle part 13.

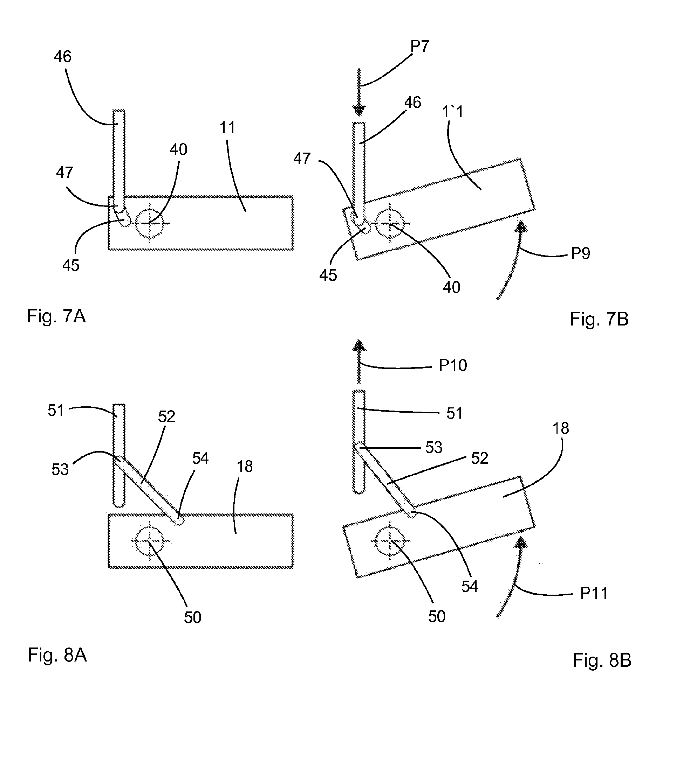

Fig. 6A-6B and 7A-7B show an embodiment for swivelling part II about a swivel axis 40 connected to the first hollow leg 5. The part II comprises a hollow L-shaped profile with a first section 41 and a second section 42. The first section 41 is pivotably connected about the pivot axis 12 to a first section 41 of the part II of the other first leg 5. At a side avert of the pivot axis 12 the first section 41 is provided with a cylinder 43 being swivelable about the swivel axis 40 of the first leg 5. The second section 42 is provided with a guiding element 44 comprising an elongated slot 45. The slot 45 extends under an angle with the longitudinal direction of the first leg 5. The first leg 5 is provided with the first extension element 46 which is pivotably connected with a first end to the second end 32 of the rod 28. The second end of the extension element 46 is provided with a pin 47. The pin 47 is slidably located in the slot 45 of the guiding element 44. In the position of the part II as shown in figure 6A, the pin 47 is located at the upper end of the slot 45 and the second section 42 rests against the first leg 5. The leg 5 is partly shown with dotted lines for the sake of clarity. When the extension element 46 is being moved in the direction as indicated by arrow P7, the pin 47 will be forced to slide in the slot 45 in the direction as indicated by arrow P8 until the pin 47 is located in the lower end of the slot 45, wherein the part II will be forced to swivel about the swivel axis 40 in the direction as indicated by arrow P9.

Preferably both assemblies are the same, so that also part II of the other leg 5 will be forced to swivel. By swivelling the parts II, the assemblies 3, 4 will be moved towards each other. A similar construction can be used for the handle parts 13.

Figure 8A and 8B show schematically an embodiment of two pivotably interconnected parts 18, wherein part 18 is swivelably connected to the second hollow leg 5 about a swivel axis 50. The second leg 5 is provided an operating element comprising the rod 29, an extension element 51 and a coupling rod 52. The extension element 51 is pivotably connected with a first end to the second end 34 of the rod 29. The second end of the extension element 51 is pivotably connected about a pivot axis 53 to the coupling rod 52. The coupling rod 52 is pivotably connected about pivot axis 54 to the part 18. The pivot axis 54 is located between the swivel axis 50 and the pivot axis 20 (see figure 1). When folding the frame 2 of the stroller I, the second end 34 of the rod 29 will be moved in a direction as indicated by arrow P5 causing the extension element 51 to be moved in the direction as indicated by arrow P10. Due to this movement, coupling rod 52 will force the part 18 to swivel about the swivel axis 50 on the second leg 6.

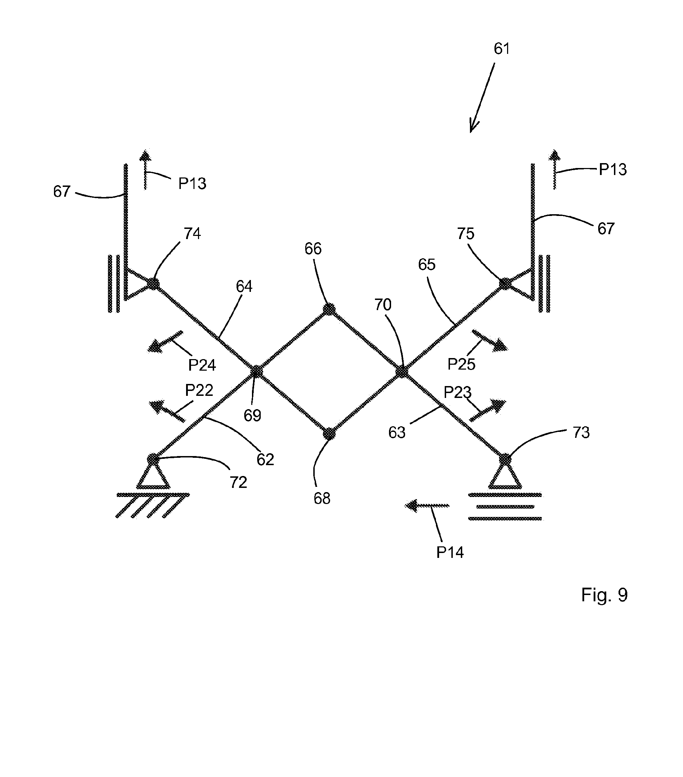

Figure 9 shows schematically a framework 61 of pivotably interconnected parts 62, 63, 64, 65, which framework 61 can be located between a pair of legs and/or a pair of arms. The framework 61 will be explained as if connected between the rear second legs 6. The parts 62, 63, 64, 65 are made of rods. Part 62 is swivelably connected near an end of the second leg 6 at swivel axis 72 whilst part 63 is swivelably connected near an end of the other second leg 6 at swivel axis 73. The parts 62, 63 are pivotably connected to each other at their other ends at pivot axis 66. Part 64 is swivelably connected to an end of a rod-like operating element 67 at swivel axis 74 whilst part 65 is swivelably connected to an end of another rod-like operating element 67 at swivel axis 75. The operating elements 67 are located in the second legs 6. The parts 64, 65 are pivotably connected to each other at their other ends at pivot axis 68.

Furthermore, the parts 62, 64 and the parts 63, 65 are pivotably connected to each other between the swivel axes 72, 73, 74, 75 and the respective pivot axis 66, 68 at pivot axis 69, 70 respectively.

When folding the stroller, the operating elements 67 will be moved in the direction as indicated by the arrow P13, due to which the swivel axes 72, 74 and 73, 75 will be moved apart and the parts 62, 63, 64, 65 will be swiveled in the direction as indicated by arrows P22, P23, P24, P25. As a result the swivel axes 73, 75 will be moved towards the swivel axes 72, 74 in the direction as indicated by arrow P14 and the second legs will be moved towards each other.

In case that the extension element is a rigid rod, the operating element is suitable for exerting a pulling force and a pushing force on the swivelable part and will cause the swivelable part to swivel both during folding and unfolding of the frame. In case that the operating element comprises a flexible bendable element, for example a cable, the operating element is more suitable for only exerting a pulling force on the part to cause the swivelable part to swivel during folding or unfolding of the frame. In such a case, the operating element may also comprise a spring to cause a pushing force for swivelling the part in the opposite direction.

As desired the frame 2 may comprises handles 60 on the first legs 5 for lifting the folded stroller 1.

It is also possible to provided other pivotably interconnected parts between the legs or the arms to move the assemblies 3, 4 towards each other.

It is also possible to have the pivotably interconnected parts only between one pair of legs, only between the pair of arms, only between the two pair of legs or only between one pair of legs and the pair of arms.

It is also possible to have the pivotably interconnected parts located closer to the pivot axes 9, 10, for example near the middle of the legs and arms.

It is also possible to provide the slots 45 or similar slots with at least two parts including an angle of less than 180 degrees with each other. The first part extends in the longitudinal direction of the leg or arm. During a first movement of the pin 47 in the first part of the slot 45 no swivelling of the part II will occur. The part II will only start swivelling as soon as the pin 47 is being moved through the second part of the slot. In this manner it is for example possible to delay the start of the swivelling of the parts between one pair of legs with respect to the start of the swivelling of parts between the other pair of legs to optimise the folding of the stroller.

It is also possible to provide the slots 45 or similar slots with a small recess from which the pin 47 can only be removed when a certain predetermined pulling or pushing force is applied. In this manner the recess functions as an additional lock and prevents inadvertently folding of the stroller.

The first legs can also be the rear legs, in which case by folding the stroller the rear legs will become located between the arms and the front legs.

The seat of the stroller may be detached from the stroller before folding the stroller or may be folded together with the stroller.

Other variations to the disclosed embodiments can be understood and effected by those skilled in the art in practising the claimed invention, from a study of the drawings, the disclosure, and the appended claims. In the claims, the words like "comprising" and "having" do not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A stroller (1) comprising at least a foldable frame (2) being provided with at least a first and a second assembly (3, 4) of at least a first leg (5), a second leg (6) and an arm (7) provided with a handle part (13), wherein in each assembly (3, 4), the arm (7) is provided with a first gear part (15) being pivotable about a first pivot axis (9) of the first leg (5), the second leg (6) is provided with a second gear part (17) being pivotable about a second pivot axis (10) of the first leg (5), wherein the gear parts (15, 17) of the arm (7) and the second leg (6) are in mesh with each other, **characterized in that** at least a pair of legs (5, 6) or a pair of arms (7) of the assemblies (3, 4) are connected to each other near ends avert of the pivot axes (9, 10) by means of at least two interconnected parts (11; 13; 18-19) being pivotable about at least one pivot axis (12), each part (11; 13; 18-19) being swivelable about a swivel axis near the end avert of the pivot axes (9, 10), wherein at least one part (11; 13; 18-19) of a leg (5, 6) is connected to the other leg or arm of the same assembly (3, 4), whilst at least one part (11; 13; 18-19) of an arm (7) is connected to one of the legs (5, 6) of the same assembly (3, 4) by means of at least one operating element (28, 46; 29, 51, 52; 30) for swivelling at least one part (11; 13; 18-19) with respect to the corresponding leg (5, 6) or arm (7), wherein by pivoting the arm (7) and second leg (6) with respect to the first leg (5) from an unfolded position to a folded position, the at least one operating element (28, 46; 29, 51, 52; 30) is being moved, whereby the parts (11; 13; 18-19) are being swivelled from a first position in which the assemblies (3, 4) are spaced apart to a second position in which the assemblies (3, 4) are located closer to each other, and vice versa.

2. A stroller according to claim 1, **characterized in that** the parts are swivelable about swivel axes of the second legs, wherein the operating element is connected with its second end to the first leg.

3. A stroller according to claim 1 or 2, **characterized in that** the parts are swivelable about swivel axes of the first legs, wherein the operating element is connected with its second end to the second leg.

4. A stroller according to claim 1, 2 or 3, **characterized in that** the handle parts of the arms are swivelable about the swivel axes of the arm, wherein the operating element is connected with its second end to the first leg.

5. A stroller according to one of the preceding claims, **characterized in that** the assemblies are connected to each other near ends avert of the pivot axes of the pair of arms, near ends avert of the pivot axes of the pair of first legs and near ends avert of the pivot axes of the pair of second legs, by means of at least two pivotably interconnected parts extending between the first ends of the arms, the first legs and the second legs respectively.

6. A stroller according to one of the preceding claims, **characterized in that** the pivotably interconnected parts are connected to each other by means of at least a intermediate part.

7. A stroller according to one of the preceding claims, **characterized in that** the operating element comprises at least a rod being pivotably connected to the leg or the arm and pivotably connected to an extension member located between the rod and the swivelable part.

8. A stroller according to one of the preceding claims, **characterized in that** the operating member or the swivelable part comprises a pin being slidable in a slot of the swivelable part or operating member respectively for swivelling the part about the swivel axis.

9. A stroller according to one of the preceding claims, **characterized in that** the frame comprises locking means for locking the gear parts against rotation.
